# EUROPEAN PATENT SPECIFICATION

(11) **EP 3 273 429 B1**
(45) Date of publication and mention of the grant of the patent: **17.02.2021**
(21) Application number: 17182160.6
(22) Date of filing: 19.07.2017
(51) Int. Cl.: G09B 19/00

(54) **MOBIL TANK FOR EDUCATIONAL OR LUDIC ACTIVITIES IN AQUATIC ENVIRONMENTS**
MOBILER TANK FÜR AUSBILDUNG ODER LUDISCHE AKTIVITÄTEN IN AQUATISCHEN UMGEBUNGEN
RESERVOIR MOBILE POUR ACTIVITES EDUCATIVES OU LUDIQUES DANS MILIEUX AQUATIQUES

(30) Priority: 19.07.2016 PT 109538 U
(43) Date of publication of application: 24.01.2018
(73) Proprietor: Malaca Tomás, Alexandre Manuel, 2440-040 Batalha (PT)
(72) Inventor: Malaca Tomás, Alexandre Manuel, 2440-040 Batalha (PT)
(74) Representative: Lourenço Martinho do Rosário, Ana Margarida

(56) References cited:
- WO-A1-03/022041
- CA-A1- 2 341 043
- US-B1- 7 244 123

## Description

### Scope of the Invention

The invention described in this patent document relates to a mobile tank for educational or recreational activities in aquatic environments. This tank allows the monitoring of the activity inside the tank, by the instructor or the assistance, placed on the outside of the tank. This process occurs in a direct visual way and without resorting to additional imaging systems.

### Background of the Invention

Several patent documents refer to structures related to aquatic activities.

The invention in US4001899 shows a structure which is both a swimming pool and a therapeutic pool. This structure may be above the ground or at ground level. This invention also provides for water jets so as to generate a current and thus enable the user to swim against this additional force.

US2008066758 relates to a physical training system. In this document the physical exercise system comprises aspects related to diving and hyperbaric therapy. In this invention a cage or a lift is placed into the water and individuals can perform physical exercise in this structure.

US20040201239 does not relate to a structure for sporting aquatic training, but rather to a mobile unit for training medical personnel. It is, however, an example of the possibility of placing complex structures such as laboratories in mobile units.

US3028688 discloses a tank for demonstration and testing of fishing lures. This tank has the ability to generate a water flow, making it possible to observe the hydrodynamics and visual behaviour of the flies that are intended to be used.

US7244123 discloses a mobile training tank for personnel entry, exit and rescue. This document discloses an equipment for educational activities mounted on a truck trailer. This invention differs from the present invention due to the fact that the tank has no vertical walls or walls made of a transparent material.

Document WO03022041 discloses an aquaculture system where several components used in aquatic environments are referred.

CA234043 relates to a miniature aquarium built on a miniature tractor-trailer. Being a miniature, this toy does not permit the use of the tank for human activities such as fishing or diving. The present invention relates to a mobile tank for educational or recreational activities as defined in the sole independent claim 1.

### Current Constraints

Currently the teaching of aquatic and underwater activities does not allow the observation of the action to be carried out by the student be performed at the level of the instructor's eyes. This observation is usually carried out through cameras placed inside the tanks that display the images to the outside. Usually the instructor is in a higher position in relation to the tank, or inside the tank with the student in case of underwater activities.

Cameras placed inside tanks do not allow for a good image quality due to limitations with in-depth focusing as well as the fact that the medium inside the tank may be murky which implies distortion of the captured image.

The instructor inside the tank, despite being closer to the student and thus giving a more targeted advice, needs to use underwater equipment which may increase the price of the lesson. Due to the fact that both are in the water, communication between instructor and student is not easy. If there is to be communication, specific communication equipment should be made available, which makes it difficult to convey teaching messages and possible corrections. The very fact that the activity is taking place in the water makes gestures more difficult and thus information becomes more difficult to pass from the instructor on to the student.

The solution in which the instructor is in a higher position than the level of the liquid inside the tank is also not without limitations. The main limitation of this position concerns to the fact that both instructor and student are on different planes, making it difficult for the instructor to perceive the actions taken by the student. In order to overcome this constraint, cameras that capture the images inside the tank and display them outside are typically used. Although this is the best option to solve the aforementioned problems, there still are some limitations, namely in the quality of the image perceived by the instructor as well as the available viewing angle.

### Advantages of the Invention

The present invention overcomes the limitations of existing solutions.

The fact that the instructor is outside but at the tank level makes it favourable for an increase in the instructor's viewing angle in relation to the performance of the student's underwater activity. The instructor may also give instructions to the student who can see him from the inside of the tank.

The present invention is also useful in observing fishing lures activity. The fact that the tank is in the line of sight of the observer, who finds himself outside the tank allows him to evaluate the behaviour of the various types of flies and baits used in the decoy of various fish species. It is thus possible to evaluate the behaviour of the flies when placed in the water as well as the appropriateness of the fly to the species of fish that is intended to fish. The current invention allows for the evaluation of the behaviour of baits and decoys both on the surface and in depth according to the species of fish intended to be fished.

It displays further benefits in learning how to angle, since the movements that are made in the fishing rod, and that directly impact upon the fishing line, the hook and the bait, can be observed by the instructor, who can make more accurate corrections.

A further advantage of the present invention in relation to the prior art is that in the present invention the tank is mobile. The tank of the present invention is placed on a vehicle, which allows it to travel over long distances. It is important to take into account that the use of the tank does not have to occur with this shape of vehicle, making the vehicle more than the means of transport to the tank.

### Brief description of drawings

The features of the present invention can be easily understood from the accompanying drawings, which are to be considered as examples and should not be construed in any way as a restriction to the scope of the invention. In the drawings, and for illustrative purposes, the measurements of some of the elements may be exaggerated and not drawn to scale. The absolute size and the relative size do not correspond to the actual dimensions for carrying out the invention.

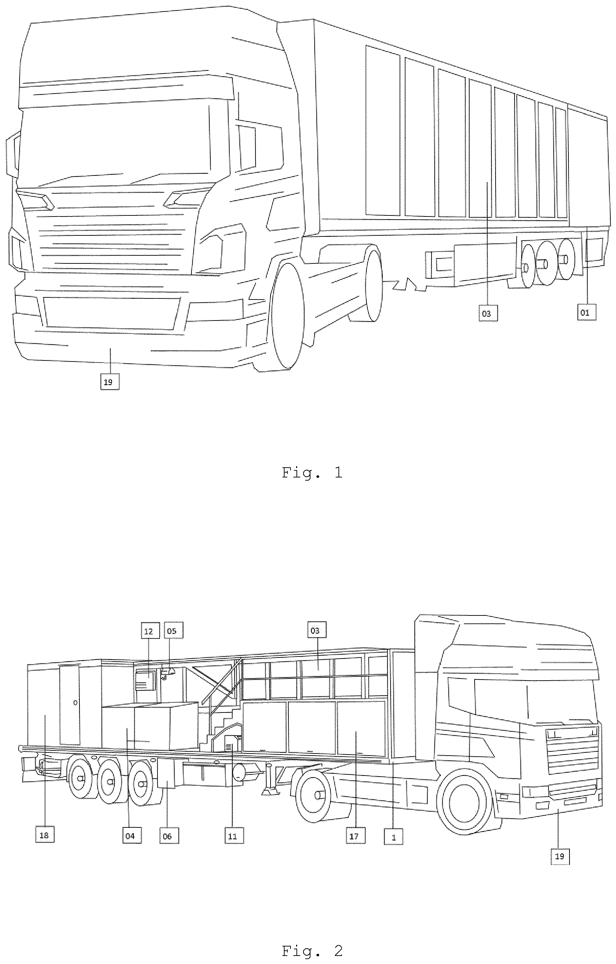

Figure 1 shows the tractor for transportation (19), the platform (01) where the tank (03) is attached, coupled to the tractor for transportation (19).
Figure 2 shows several equipments to support the operation of the mobile tank and which are integrated in the platform (01). Below the tank (03) is the storage room (17). The independent electric generator (11) is immediately adjacent the storage room (17). The life support system (06) is located in the lower portion of the platform (01). The support crane (05) is immediately above the tanks for the transportation of marine animals (04). The water cooler/heater (12) is immediately next to the support crane.

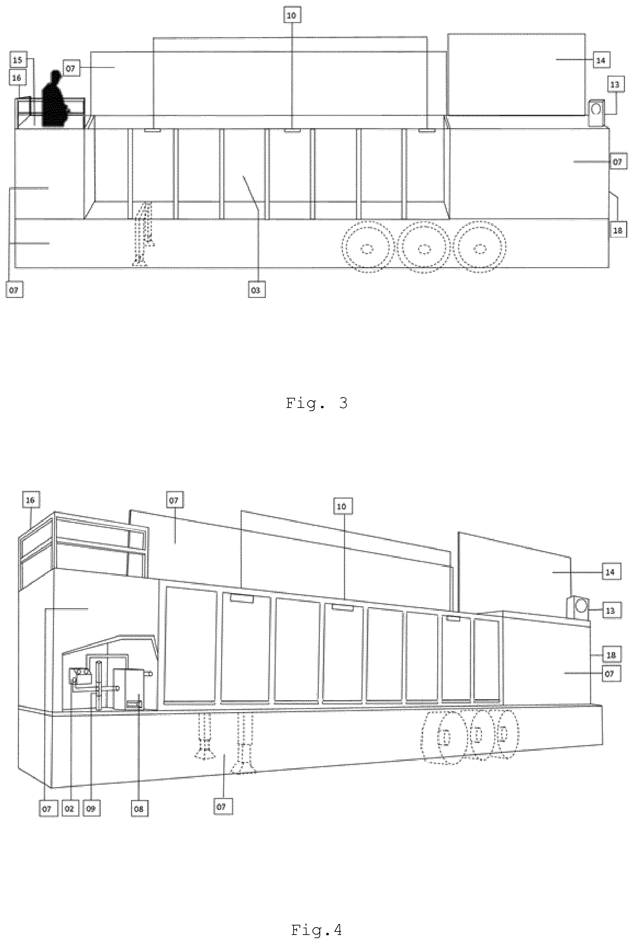

Figure 3 shows the position of the equipment technician on the raised platform (15) which is properly protected with the safety protection of the raised platform (16). Lighting (10) is also present, sound equipment (13), video equipment (14) and display spaces (07). Lighting (10) allows the tank (03) to be used at any time of the day, including during the night time. The sound equipment (13), the video equipment (14) and the display spaces (07) of, but not limited to, advertising and miscellaneous information are to be found in the outside.

In figure 4 it is possible to observe the water pump (02), the ultraviolet lamps (09) and the double biological filter (08). All these devices contribute to the maintenance of good water quality that is present in the tank (03). In this figure several other elements are visible, namely the display spaces (07), the lighting (10), the safety protection of the raised platform (16), the office (18), the sound equipment (13), the video equipment (14) and the safety protection of the raised platform (16).

### Detailed description of the invention

The invention described herein features a mobile tank for educational or recreational activities in aquatic environments, integrates the means for moving the mobile tank, the tank (03) and the means for supporting the operation of the mobile tank:
- Platform (01);
- Water pump (02);
- Tanks for the transportation of marine animals (04);
- Support crane (05);
- Life support system (06);
- Display spaces (07);
- Double biological filter (08);
- Ultraviolet lamps (09);
- Control sensors;
- Lighting (10);
- Independent electric generator (11);
- Water cooler/heater (12);
- Sound equipment (13);
- Video equipment (14);
- Raised platform (15);
- Safety protection of the raised platform (16);
- Storage room (17);
- Office (18);
- Tractor for transportation (19).

The platform (01) where the tank (03) for educational or recreational activities in aquatic environments of the present invention is integrated, includes means for displacement, namely but not exclusively, wheels, and is coupled to a tractor for transportation (19).

In order to watch the activities that are taking place in the water environment, at least one of the substantially vertical walls of the tank (03) is made of a transparent material.

The storage room (17) provides space for the storage of the various equipment items and materials needed to carry out the educational and recreational activities.

The independent electric generator (11) serves, in the event that there is no external power supply or in case of failure, to ensure the operation of the essential devices during the class or for the demonstration that is taking place.

The support crane (05) has the main function of transporting the water for the tanks for the transportation of marine animals (04) to and from the platform (01).

The water cooler/heater (12) has the function of controlling and adjusting the temperature both in the tank (03) and in the tanks for the transportation of marine animals (04). The temperature of the water inside the tank (03) can be adjusted, depending on the activity to be performed.

In order to maintain the integrity of the physical and chemical characteristics of the water inside the tank, ultraviolet lamps (09) are used, whose ultraviolet radiation allows the elimination of microorganisms, bacteria, protozoa, viruses and mainly suspended algae . The double biological filter (08) promotes the formation of bacteria that improve the water quality of the tank (03) by eliminating polluting elements from the water. This double biological filter (08) also comprises an automatic water filtration system with automatic oxygenation system.

There are several control sensors that allow to analyse and control the water in the tank (03), namely through the control of salinity, conductivity, oxygen, pH, KH (amount of carbonates and bicarbonates), GH (water hardness), NO₂, NO₃ and water temperature.

The lighting (10) in the apparatus, namely but not exclusively, halogen, allows the user to recreate various environments and can be controlled with a timer.

The apparatus of the present invention is also equipped with sound equipment (13) and video equipment (14) which are intended to communicate with the outside while the activity is in progress, as well as recording activities if desired.

The transport of marine animals is carried out in the tanks for the transportation of marine animals (04) with oxygenation and autonomous filtration. The tanks for the transportation of marine animals (04) are raised to and from the platform (01) via a support crane (05).

In order to ensure the survival of marine animals in the tanks for the transportation of marine animals (04) in case of power failure, these tanks are equipped with a life support system (06) consisting of a generator, batteries, charger, transformer/converter and oxygen compressor ensuring the operation of the essential equipment for the survival of marine animals in the event of a power failure. The filter and refrigerator/heater systems are supplied with water through the water pump (02).

The mobile tank also has the all support infrastructure to carry out its activity, whether educational or recreational, namely an office (18) for administrative support, a raised platform (15) with its safety protection (16) of the raised platform (15), as well as a storage room (17) that allows the storage of several material.

## Claims

1. A mobile tank for educational or recreational activities in aquatic environments, consisting of a tank (03) containing water for human use, supporting means (1,2,5-14) to support the operation of the mobile tank and support infrastructures (15,16,18) to carry out its activity integrated in a platform (01), the platform (01) comprising means for displacement, **characterized in that**:
- at least one of the substantially vertical walls of the tank (03) is made of a transparent material.

2. A mobile tank for educational or recreational activities in aquatic environments according to the preceding claim, **characterized in that** the means for displacement are wheels.

3. A mobile tank for educational or recreational activities in aquatic environments according to the preceding claims, **characterized in that** the platform (01) is coupled to a transport tractor (19).

4. A mobile tank for educational or recreational activities in aquatic environments according to claim 1, **characterized in that** the means for supporting the operation of the tank (03) is at least one of the following equipment: water pump (02), tanks for the transportation of marine animals (04) equipped with life support system (06), support crane (05), display spaces (07), lighting (10), independent electric generator (11), water cooler/heater (12), sound equipment (13), video equipment (14), raised platform (15) and respective safety protection of the raised platform (16), storage room (17) and office (18).

5. A mobile tank for educational or recreational activities in aquatic environments according to the preceding claims, **characterized in that** the tank (03) is equipped with:
- double biological filter (08);
- ultraviolet lamps (09);
- control sensors.

6. A mobile tank for educational or recreational activities in aquatic environments according to claim 4, **characterized in that** the life support system (06) consists of a generator, batteries, charger, transformer/ converter and oxygen compressor.

7. A mobile tank for educational or recreational activities in aquatic environments according to claim 5, **characterized in that** the double biological filter (08) comprises an automatic water filtration system with automatic oxygenation system.

8. A mobile tank for educational or recreational activities in aquatic environments according to claim 5, **characterized in that** the control sensors analyze and control the water in the tank (03) through the control of salinity, conductivity, oxygen, pH, KH (amount of carbonates and bicarbonates), GH (water hardness), NO₂, NO₃ and water temperature.

9. A mobile tank for educational or recreational activities in aquatic environments according to the preceding claims, **characterized in that** the temperature of the water in the tank (03) and the water in the tanks for the transportation of marine animals (04) is adjusted by means of the water cooler/heater (12).

10. A mobile tank for educational or recreational activities in aquatic environments according to the previous claims, **characterized in that** the lighting (10) is halogenous.

11. A mobile tank for educational or recreational activities in aquatic environments according to claim 4, **characterized in that** the transport of the marine animals is carried out in the tanks for the transportation of marine animals (04) with oxygenation and autonomous filtration.

## Patentansprüche

1. Ein mobiler Tank für Bildungs- oder Freizeitaktivitäten in aquatischen Umgebung, bestehend aus einem Tank (03) wasser für den menschlichen Gebrauch enthaltend, unterstützende mittel (1,2,5-14) unterstützung des betriebs des mobilen panzers und unterstützung von infrastrukturen (15,16,18) seine tätigkeit in eine plattform (01) integriert durchzuführen, die platform (01) umfassend mittel zur verschiebung, **gekennzeichnet durch**:
- mindestens eine der im wesentlichen senkrechten wände des Tank (03) besteht aus einem transparenten material besteht.

2. Ein mobiler Tank für Bildungs- oder Freizeitaktivitäten in aquatischen Umgebung gemäß dem vorhergehenden anspruch, der **dadurch gekennzeichnet ist, dass** die mittel zur verdrängung räder sind.

3. Ein mobiler Tank für Bildungs- oder Freizeitaktivitäten in aquatischen Umgebung gemäß den vorstehenden ansprüchen, der **dadurch gekennzeichnet ist, dass** die plattform (01) ist mit einem transporttraktor gekoppelt (19) .

4. Ein mobiler Tank für Bildungs- oder Freizeitaktivitäten in aquatischen Umgebung gemäß anspruch 1, **dadurch gekennzeichnet, dass** die mittel zur unterstützung des betriebs des Tank (03) ist mindestens eines der folgenden geräte: wasserpumpe(02), tanks für den transport von meerestieren (04) ausgestattet mit lebenserhaltendem system (06), stützkran (05), anzeigeflächen (07), beleuchtung (10), unabhängiger elektrischer generator (11), Wasserkühler/-erhitzer eingestellt (12), tonausrüstung (13), videogeräte (14), erhobene plattform (15) und entsprechender sicherheitsschutz der erhöhten plattform (16), Lagerraum (17) und Büro (18).

5. Ein mobiler Tank für Bildungs- oder Freizeitaktivitäten in aquatischen Umgebung gemäß den vorhergehenden ansprüchen, der **dadurch gekennzeichnet ist, dass** der Tank (03) ist ausgestattet mit :
- doppelter biologischer filter (08);
- UV-Lampen (09);
- sensoren steuern.

6. Ein mobiler Tank für Bildungs- oder Freizeitaktivitäten in aquatischen Umgebung gemäß Anspruch 4, **dadurch gekennzeichnet, dass** das lebenserhaltendem system (06) besteht aus einem generator, batterien, ladegerät, transformator / konverter und sauerstoffkompressor.

7. Ein mobiler Tank für Bildungs- oder Freizeitaktivitäten in aquatischen Umgebung gemäß anspruch 5, **dadurch gekennzeichnet, dass** der doppelter biologische filter (08) umfasst ein automatisches wasserfiltersystem mit automatischem oxygenierungssystem .

8. Ein mobiler Tank für Bildungs- oder Freizeitaktivitäten in aquatischen Umgebung gemäß anspruch 5, **dadurch gekennzeichnet, dass** die steuersensoren das wasser im Tank (03) analysieren und steuern durch die kontrolle von salzgehalt, leitfähigkeit, sauerstoff, pH, KH (Menge an Carbonaten und Bicarbonaten), GH (Wasserhärte), NO₂, NO₃ und wassertemperatur.

9. Ein mobiler Tank für Bildungs- oder Freizeitaktivitäten in aquatischen Umgebung gemäß den vorhergehenden ansprüchen, der **dadurch gekennzeichnet ist, dass** die temperatur des wassers im Tank (03) und das wasser in den tanks für den transport von meerestieren (04) wird über den Wasserkühler/-erhitzer eingestellt (12).

10. Ein mobiler Tank für Bildungs- oder Freizeitaktivitäten in aquatischen Umgebung gemäß den vorherigen ansprüchen, der **dadurch gekennzeichnet ist, dass** die beleuchtung (10) ist halogen.

11. Ein mobiler Tank für Bildungs- oder Freizeitaktivitäten in aquatischen Umgebung gemäß anspruch 4, **dadurch gekennzeichnet, dass** der transport der meerestiere in den tanks für den transport von meerestieren (04) erfolgt mit Sauerstoffanreicherung und autonomer Filtration.

## Revendications

1. Réservoir mobile pour activités éducatives ou récréatives en milieu aquatique, constitué d'un réservoir (03) contenant de l'eau à usage humain, moyens de support (1,2,5-14) pour soutenir le fonctionnement du réservoir mobile et les infrastructures de support (15,16,18) pour réaliser son activité intégrée dans une plateforme (01), la plateforme (01) comprenant des moyens de déplacement, **caractérisé en ce que**:
- au moins une des parois sensiblement verticales du réservoir (03) est faite d'un matériau transparent.

2. Réservoir mobile pour activités éducatives ou récréatives en milieu aquatique selon la revendication précédente, **caractérisé en ce que** les moyens de déplacement sont des roues.

3. Réservoir mobile pour activités éducatives ou récréatives en milieu aquatique selon les revendications précédentes, **caractérisé en ce que** la plateforme (01) est attelée à un tracteur de transport (19).

4. Réservoir mobile pour activités éducatives ou récréatives en milieu aquatique selon la revendication 1, **caractérisé en ce que** les moyens pour supporter le fonctionnement du réservoir (03) est au moins un des équipements suivants: pompe à eau (02), citernes pour le transport d'animaux marins (04) équipé d'un système de survie (06), grue de soutien (05), espaces d'affichage (07), éclairage (10), générateur électrique indépendant (11), refroidisseur/chauffage d'eau (12), matériel de sonorisation (13), équipement vidéo (14), plateforme surélevée (15) et protection de sécurité respective de la plateforme surélevée (16), pièce de stockage (17) et bureau (18).

5. Réservoir mobile pour activités éducatives ou récréatives en milieu aquatique selon les revendications précédentes, **caractérisé en ce que** le réservoir (03) est équipé de:
- double filtre biologique (08);
- lampes à ultraviolets (09);
- capteurs de contrôle.

6. Réservoir mobile pour activités éducatives ou récréatives en milieu aquatique selon la revendication 4, **caractérisé en ce que** le système de survie (06) se compose d'un générateur, de batteries, d'un chargeur, d'un transformateur/convertisseur et d'un compresseur d'oxygène.

7. Réservoir mobile pour activités éducatives ou récréatives en milieu aquatique selon la revendication 5, **caractérisé en ce que** le double filtre biologique (08) comprend un système de filtration d'eau automatique avec système d'oxygénation automatique.

8. Réservoir mobile pour activités éducatives ou récréatives en milieu aquatique selon la revendication 5, **caractérisé en ce que** les capteurs de contrôle analysent et contrôlent l'eau dans le réservoir (03) par le contrôle de la salinité, de la conductivité, de l'oxygène, du pH, du KH (quantité de carbonates et bicarbonates), de la GH (dureté de l'eau), du NO₂, du NO₃ et de la température de l'eau.

9. Réservoir mobile pour activités éducatives ou récréatives en milieu aquatique selon les revendications précédentes, **caractérisé en ce que** la température de l'eau dans le réservoir (03) et l'eau des citernes pour le transport des animaux marins (04) est réglé au moyen du refroidisseur/chauffage d'eau (12).

10. Réservoir mobile pour activités éducatives ou récréatives en milieu aquatique selon les revendications précédentes, **caractérisé en ce que** l'éclairage (10) est halogène.

11. Réservoir mobile pour activités éducatives ou récréatives en milieu aquatique selon la revendication 4, **caractérisé en ce que** le transport des animaux marins est effectué dans les réservoirs pour le transport des animaux marins (04) avec oxygénation et filtration autonome.
